# EUROPEAN PATENT APPLICATION

(11) **EP 0 603 513 A2**
(43) Date of publication of application: **29.06.1994**
(21) Application number: 93117870.1
(22) Date of filing: 04.11.1993
(51) Int. Cl.: G06F 15/21

(54) **Process management and control system and method for converting documents**

(30) Priority: 21.12.1992 US 994376
(71) Applicant: MOTOROLA, INC., Schaumburg, IL 60196 (US)
(72) Inventor: Toole, Brian, Morrisville North Carolina 27560 (US)
(74) Representative: Hudson, Peter David

(57) **Abstract**

A document conversion system (10) and method manage a document conversion facility (5) for converting a large amount of documents from paper format or some type of preliminary electronic form to some type of final electronic form. The document conversion system (10) has a number of workstations (16, 17) where employees of the facility perform a variety of workflow or document conversion tasks on batches of pages from a number of documents. Each of the employees are assigned workflow tasks and batches by either a facility operator or by the document conversion system (10) which matches workflow task skills and skill level of the employee with the difficulty of the workflow task to be performed. The document conversion system (10) also tracks how efficiently an employee performs his or her assigned workflow tasks as well as what workflow task needs to be performed next on a particular batch.

## Description

### Technical Field

This invention relates generally to document conversion systems and methods and in particular, to a document conversion system and method for managing a mass production data conversion facility to convert a large amount of documents from paper format to digital or electronic form.

### Background of the Invention

A typical conventional document conversion system takes pages of a document such as technical manuals, books, memos and forms, for example, and converts the pages of the document into some type of electronic data form. In the rudimentary conventional system, an operator takes one page of a document and feeds it into a scanner. The scanner scans the page of the document which results in a raster image of the page. An optical character recognition (OCR) engine executes an OCR algorithm on the raster image to recognize characters within the raster image. The operator may execute a spell checker on the output to find any misspelled words. If any words are found to be misspelled, the operator corrects them by locating and correcting the mistakes through some type of interactive word editor.

Several significant problems with the conventional system are the lack of effective management of an operator's time, lack of tracking documents throughout the conversion process, lack of prioritizing the tasks used to convert the documents, and lack of prioritizing which document should be converted first. The operator spends considerable time doing multiple tasks instead of concentrating on a single task. Even if the conventional system was configured so that an operator could perform his/her task on multiple pages, there is a lack of efficient automated or electronic managing and tracking of which parts of a number of documents have been converted. Therefore, there exists a significant need to manage and track documents throughout the document conversion process and to manage, track, and assign employees to specific document conversion tasks.

### Summary of the Invention

The present invention has utility in solving the problems associated with the conventional systems by providing a complete process management and control system (PMACS) which simultaneously controls document conversion on many different documents while controlling the management of employees, such as which of the employees is assigned to what particular document conversion task.

Thus it is an advantage of the present invention to have a high volume, document conversion software system and method to handle inter-task management and prioritization of tasks.

It is also an advantage of the present invention to optimize and automate electronically the transfer of parts of many documents between tasks.

Yet another advantage of the present invention is to provide tools and interfaces necessary for day to day operations of a complex, configurable document conversion production system.

Another advantage of the present invention is to reduce the price per page of data conversion by assigning a particular document conversion task to a qualified operator so that the throughput is maximized.

It is another advantage of the present invention to provide information to a document conversion facility manager so that the manager can assign a qualified operator to handle a particular task on specific documents.

It is another advantage of the present invention to assign employees who possess higher skill levels to more complex tasks which require those higher skill levels.

Yet another advantage of the present invention is to have a production system where the components of the system are modular and reconfigurable to provide a flexible document conversion system.

According to one aspect of the invention, a document conversion system is provided for converting a plurality of documents. The documents comprise a plurality of batches and each of the batches comprise a plurality of pages. The batches are being converted through a plurality of workflow tasks. A plurality of employees perform the workflow tasks. The document conversion system comprises a plurality of workstations where the employees perform the workflow tasks on the batches; and workflow task and employee management means coupled to each of the workstations for managing and tracking the batches through the workflow tasks and for managing, tracking, and assigning employees to the workflow tasks for each of the batches.

According to another aspect of the invention, a document conversion method is provided for converting a plurality of documents. The documents comprise a plurality of batches and each of the batches comprise a plurality of pages. The batches are being converted through a plurality of workflow tasks. A plurality of employees perform the workflow tasks. The document conversion method comprises the steps of a) managing and tracking the batches through the workflow tasks; and b) managing, tracking, and assigning the employees to the workflow tasks for each of the batches.

### Brief Description of the Drawings

The invention is pointed out with particularity in the appended claims. However, other features of the invention will become more apparent and the invention will be best understood by referring to the following detailed description in conjunction with the accompanying drawings in which:
FIG. 1 shows a hardware configuration of PMACS in accordance with a preferred embodiment of the invention.
FIG. 2 shows an overall flowchart for processing documents through PMACS in accordance with a preferred embodiment of the invention.
FIG. 3 shows a flowchart of the steps used by a document analyst in analyzing the structure of a document in accordance with a preferred embodiment of the invention.
FIG. 4 illustrates how a document is broken down into batches and pages in accordance with a preferred embodiment of the invention.
FIG. 5 shows a configuration of a workflow task group and the related sequential workflow tasks in accordance with a preferred embodiment of the invention.
FIG. 6 shows a flowchart of how employees are managed in accordance with a preferred embodiment of the invention.
FIG. 7 shows a flowchart of how documents are tracked and managed through document conversion in accordance with a preferred embodiment of the invention.

### Description of the Preferred Embodiments

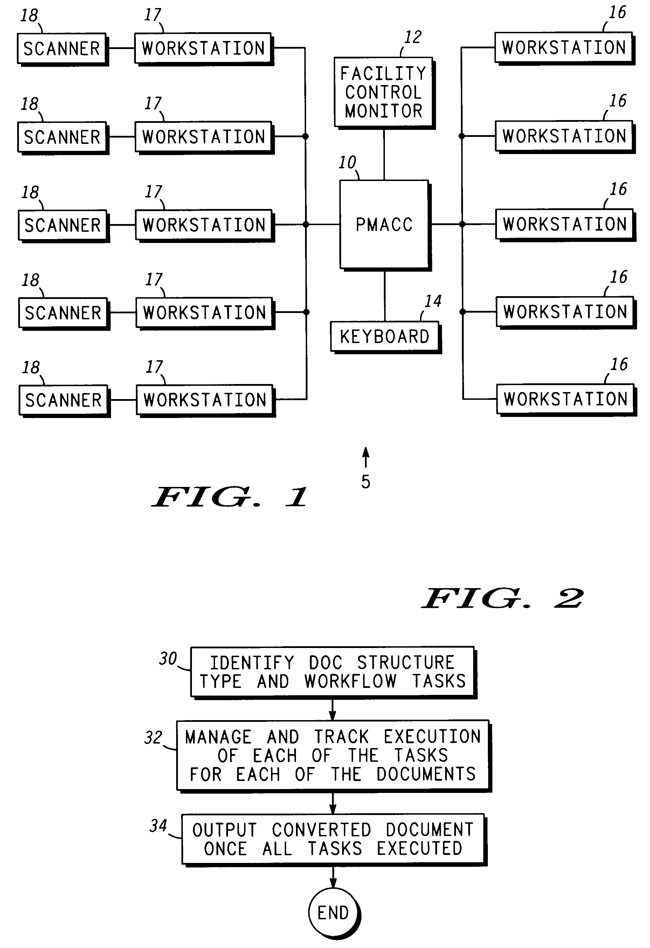

A hardware configuration of a Production Management and Control System (PMACS) 5 according to a preferred embodiment of the invention is shown in FIG. 1. PMACS 5 comprises a Production Management and Control Computer (PMACC) 10, a number of workstations 16 and 17 and a number of different types of scanners 18. PMACC 10 is connected to each of the workstations 16 and 17. PMACC 10 is central to managing which tasks are to be performed on a document, assigning employees to certain document conversion tasks, and tracking documents through the conversion process.

PMACC 10 also includes at least one facility control monitor 12 and a keyboard 14 for inputting and communicating with employees of the document conversion facility. Each of the workstations 16 and 17 comprises a monitor, computer, and keyboard. An employee of the document conversion facility will perform an assigned document conversion task at each of the workstations 16 and 17. PMACC 10 and each of the workstations 16 and 17 are commercially available systems, such as a Sparcstation manufactured by Sun Microsystems Computer Corporation, for example. The hardware of PMACS 5, however, can also be configured by using IBM or Apple workstations, for example. The program executed by PMACC 10 could be executed on most any type of commercially available computer.

Each of the workstations 17 shown in FIG. 1 is connected to a scanner 18. The scanner 18 is commercially available from Xerox or Fujitsu for example, and provides a system which can scan pages of different types of documents.

In document conversion, there is no single model of document conversion which is appropriate for all types of documents. Some documents are received in some type of preliminary electronic form and only need to be reformatted, while some documents need to be taken from paper form into some type of final electronic form. For example, some documents may only be a collection of photographs while some documents are exclusively text, such as a book of fiction, for example. Each of these different types of documents will most likely require different document conversion tasks. PMACS is designed so that it can individually tailor and reconfigure the document conversion tasks for each specific document.

An overall method for converting a number of documents after being received by a document conversion facility until each of the documents is in a final format requested by a customer is shown in FIG. 2. Briefly, each of the documents received at the document conversion facility is evaluated by a document analyst in step 30 to identify what type of structure it has and which workflow or document conversion tasks will be required for converting the document into a format requested by the customer. Next, PMACC 10 then manages and tracks the execution of each of the workflow (document conversion) tasks on each of the batches for each of the documents in step 32. A converted document is ready for delivery in step 34 when all the workflow tasks have been executed on all of the batches for a particular document. Each of the converted documents is then delivered to the customer.

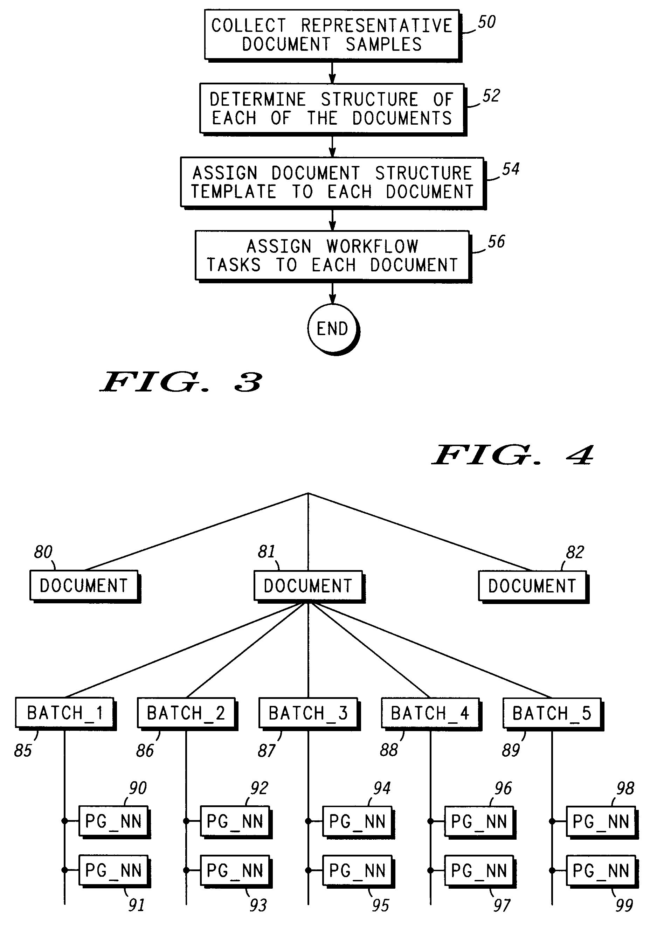

As shown in FIG. 2, after one or more documents are delivered to the document conversion facility, a document analyst evaluates and analyzes each of the documents in step 30 to determine the structure of each of the documents and which workflow tasks should be executed to convert a document into a format requested by a customer. The procedure the document analyst uses to perform the document evaluation on each of the documents is shown in FIG. 3.

As shown in FIG. 3, a document analyst first examines a representative sample of all the types of documents to be converted in step 50. This requires examining each of the documents to see how they compare or differ. The document analyst also evaluates each of the documents to understand its actual physical or structural characteristics in step 52. Such characteristics include the actual demarcation points between a document's structural elements such as chapters, sections, indexes, pages, and the actual physical page count, for example. Some documents may be similar in structure such as books of fiction, for example, where the basic structure may be a title page, copyright page, table of contents, and chapters which comprise the text. However, the structure of books of fiction differs greatly from the structural composition of a technical manual such as a semiconductor product catalog, or a score for a Mozart symphony, for example.

Once an analyst examines a document and determines the structure of the document in step 52, the analyst then assigns a document structure template to each of the documents in step 54. A document structure template denotes the basic structural elements which all documents having a particular type possess, for example, books of fiction or technical manuals. The document structure template also dictates how the contents of a document should be processed and defines the individual default attributes for each of the pages.

The document structure template is not intended to define a single document, but rather the range of structural elements which are required or possible within a given type of document. The document structure is key to determining how documents are similar or differ according to their structure. For example, a technical manual may comprise a title page, a table of contents, a list of figures, a summary, one or more sections, zero or more chapters comprising text and figures, and an index, while a book of fiction may comprise a table page, a table of contents, and zero or more chapters which comprise the text of the book. If a particular document does not fit any of the existing document structure templates, a new document structure template must be defined by the document analyst for detailing the structure of the document. The definition may require some adjustments and training in PMACS 5 so that the most efficient document conversion steps are executed.

After each of the documents is assigned a document structure template in step 54, the analyst then determines in step 56 the workflow (document conversion) tasks and parameters which will be executed by PMACC 10 in PMACS 5. Workflow or document conversion tasks may include but are not necessarily limited to partitioning, scanning, zoning, optical character recognition (OCR), OCR editing, and text proofing. Each of these workflow tasks are discussed in more detail below. The analyst must determine which workflow tasks need to be executed to get the required output requested by the customer. The analyst may have to test a representative sample of the document in PMACS 5 so that workflow tasks can be adjusted to determine the optimal method of performing the particular document conversion.

Once documents are received at the document conversion facility, they are managed and prepared by a job control department for document conversion. All documents are stored in a secure location and are checked out to employees only to accomplish a particular workflow task. The use of bar coded labels on all documents, batch containers, and employee identification cards allows the facility operator to easily monitor which employee has a particular batch or document or where a particular batch or document is stored. The facility operator only needs to scan the identification card and document with a bar code reader to identify which employee has which batch.

Physical inventory of all documents under the control of the document conversion facility is required from time to time. This procedure helps in safeguarding each of the customer's physical documents. This inventory process is accomplished by the job control department using a handheld bar code reader commonly used in warehouses and commercial grocery stores. To accomplish the inventory, an operator simply scans the bar code label of each physical document to store the identification and location information in the hand held device. When the inventory is completed, the data is downloaded from the device directly into PMACC 10. Any inventory missing can be tracked back to which employee had possession of it last or where it was last stored.

Each of the documents is prepared for processing in PMACS 5 by partitioning a document into separate batches. The partitioning task involves an employee of the document conversion facility physically separating each of the documents into batches. Batches are created to facilitate the efficient processing of a document and are a sequential ordering of the pages in the document. For example, the first batch comprises those pages which precede the pages contained in the second batch.

Before the employee can separate a document into batches, the document analyst first has to determine how the document will be partitioned into batches. The analyst determines what an optimal size of a batch is based upon what type of document is defined by the document structure template. Once the analyst designates what pages are in a particular batch, an employee will actually separate the document into batches according to what the analyst had previously designated for a particular document. The employee groups the physical pages into discreet batch folders, assigns a unique bar code to each batch, and stores the batch folders at the job control department so that they are available to be checked out by employees. PMACC 10 tracks each of the batches through the document conversion system using the unique bar code assigned to a batch.

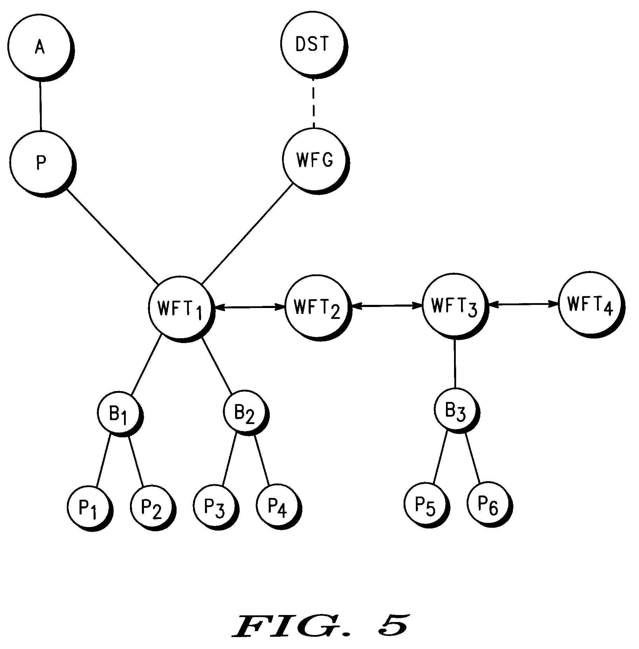

A graphical representation of a number of documents separated into batches and into a number of pages per batch is shown in FIG 4. Each of the documents 80-82 has a structure similar to the document structure shown for document 81. Document 81 is divided into batches 85-89, and each of the batches is further divided into a certain number of pages 90-99. Batches 85-89 may represent a chapter in a book; however, there is no limitation that a batch only represent a single chapter. A batch could be many chapters or only part of a chapter, for example. Moreover, a batch could comprise pages which comprise text only while another batch could comprise pages having images only, such as pie charts for example.

After the pages of a document are separated into their designated batch, the document is ready for scanning. An employee who is trained and qualified to perform the scanning, reports to the job control department at the beginning of a work shift and requests documents which are available for scanning and which the employee is qualified to scan. A job control employee consults PMACC 10 to determine the availability, document ID, and storage location of a document. Using a bar code label on the document and the employee's facility ID card, the job control operator checks out available documents to the employee who is qualified to perform the scanning task.

The employee or scan operator reports to one of the workstations 17 connected to a scanner 18 and begins the scanning task. The workstations 17 are automatically configured for the type of scanner 18 coupled to the workstation 17. To begin scanning, the operator uses a bar code reader to read the bar code label on each of the batches. This procedure initializes the scan task application in the workstation 17 with the appropriate parameters and control information as defined by the document structure template for the particular document being scanned and the particular scanner 18 configuration.

The scanning task involves a commercially available scanner 18 optically scanning pages of document to form a raster image for each of the pages. The number of pages and the speed at which a page is fed into the scanner 18 is controlled by the scan operator at one of the workstations 17. Moreover, the operator for the scanning task needs to make sure that pages of a document are not fed into the scanner sideways or that the scanner is not malfunctioning in some way.

The operator controls the scanner 18 until all pages of an assigned batch have been processed. If the operator is not satisfied with the image quality of a particular scan, the scanner 18 can be adjusted as necessary and the affected pages of the batch may be rescanned before continuing with subsequent pages. When scanning is completed, the operator returns the original batches to the job control department where they are checked in using the bar code reader. The batch bar code is scanned to identify which batches of which documents are being returned.

The zoning task requires an operator to determine whether a raster image contains images, figures, graphics, tables, or text which includes characters, numbers, and punctuation marks, for example. It is important to distinguish text from figures because a figure does not require execution of an optical character recognition (OCR) algorithm to locate and determine what the text is, since there is no text. The operator in the zoning task is responsible for identifying each rectangular area in a raster image as being one of several particular data types, such as text, tables, figures, and graphics, for example.

Once the zoning task is performed by an operator, the optical character recognition (OCR) task requires an operator to receive the zoned raster image and oversee the transformation of the zoned raster image identified as text into ASCII characters. The OCR task includes executing a commercially available OCR algorithm to locate and identify the ASCII characters from the raster image. The task of the OCR operator is to make sure one of the OCR algorithms selected for a particular batch is performing with some type of reasonable accuracy. If the OCR algorithm is performing poorly, another OCR algorithm may have to be used to increase the rate and accuracy of recognizing characters from a raster image. The OCR task may be automated by retrieving statistics from the process and raising an alarm to the supervisor if the recognition accuracy falls below a predetermined level.

Once the text of the raster image is converted into ASCII characters, the OCR editing task requires an operator to correct any errors found in the translated ASCII characters and words. During the OCR task, the OCR engine may identify uncertain words which are not found in a dictionary and uncertain character whose probability of being correct falls below a specific threshhold. The operator of the OCR editing task is presented with the uncertainties and is also responsible for correcting any of the uncertainties.

Next, the text proofing task is performed by an operator. The text proofing task involves presenting the operator with every line from every text zone. The operator is responsible for checking the recognized OCR text which is output from the OCR editing task against the original text from the raster image.

Thus the analyst has to assign each of the documents to be converted a sequential list of the partitioning, scanning, zoning, OCRing, and text proofing workflow tasks. This decision depends on what is needed by the customer for each of the documents to be converted. The list of sequential tasks is referred to as a workflow group which comprises workflow tasks such as shown in FIG. 5, for example. Each of the documents will have a corresponding workflow group assignment as shown in FIG. 5.

In FIG. 5, "A" represents an application object "A" which stores information about one of the workflow tasks to be performed such as scanning or zoning, for example. An object is a set of methods and data used to store information or accomplish a workflow task. Application object "A" stores information about each of the scanners 18 connected in PMACS 5 shown in FIG. 1. For example, application object "A" may contain information about each type of scanner 18 and the number of the scanners 18 connected in PMACS 5, such as three Xerox scanners and one Fujitsu scanner.

In FIG. 5, "P" represents a process object "P" which stores information about the physical characteristics of a particular scanner connected to PMACS 5, such as a Xerox scanner, for example. The information stored in process object "P" includes, but is not necessarily limited to, where the scanner 18 is physically located in the document conversion facility, how to start and operate the scanner 18, contrast settings (how light or dark should the scan be), and a level of skill required in order to operate the particular scanner 18. The process object "P" and the application object "A" do not change except for updating information for a particular scanner 18, for example.

FIG. 5 also shows a workflow group object "WFG" connected to document structure template "DST" and workflow task object "WFT1". Workflow group object "WFG" is created by the document analyst and stores information about the sequence of execution of particular workflow tasks, such as the name of the workflow task and which workflow task "WFT" is first, for example. The document structure template object "DST", as explained above, contains information about how a document is structured, such as the number of chapters and pages in a document, for example.

Each of the workflow task objects "WFT1-WFT4" shown in FIG. 5 comprises information defined by the document analyst on what step needs to be performed in order to convert a document according to what a customer is requiring. For example, workflow task object "WFT1" may comprise information about the preparation task, while workflow task object "WFT2" may comprise information about the scanning task, and workflow task object "WFT3" may comprise information about the zoning task. Each workflow task object contains references to previous and subsequent tasks as well as a reference to parallel tasks if it is specified.

As shown in FIG. 5, workflow task object "WFT1" has two batches "B1" and "B2" assigned to it, while batch "B3" is assigned to workflow task object "WFT3". Batches "B1" and "B2" each comprises pages "P1", "P2" and "P3", "P4" respectively, while batch "B3" comprises "P5" and "P6". As shown in FIG. 5, the workflow task defined by workflow task object "WFT1" must be executed on batches "B1" and "B2", the workflow task defined by workflow task object "WFT3" must execute batch "B3".

Once the workflow group or sequential list of workflow task objects are defined by the document analyst for a particular document, the workflow group "WFG" and workflow tasks "WFT1-WFT4" can be saved in PMACC 10. The workflow group "WFG" saved in PMACC 10 can be retrieved, copied and used as a building block for the creation of a new workflow group for a different document.

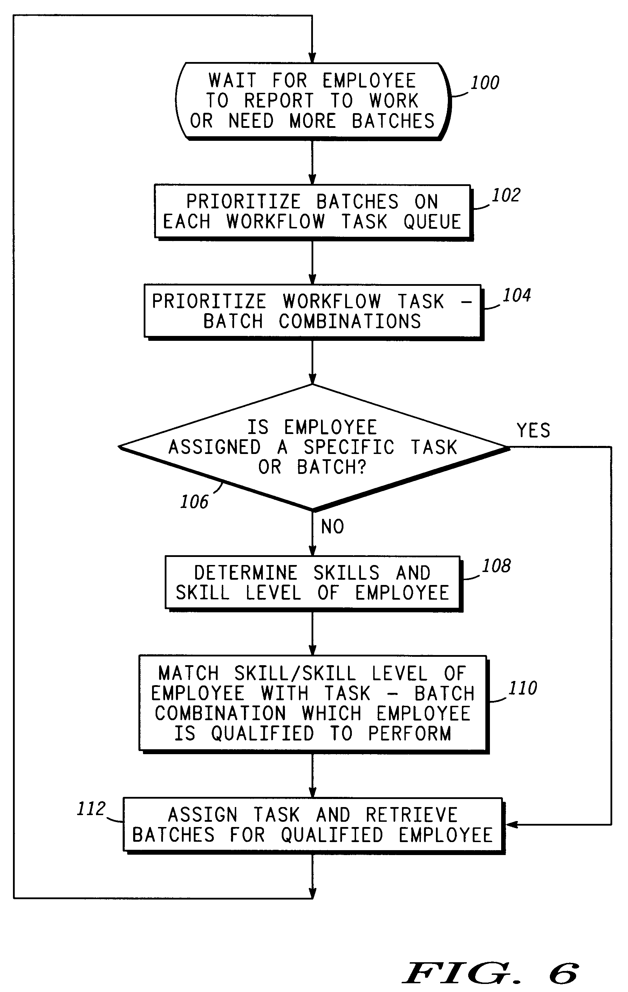

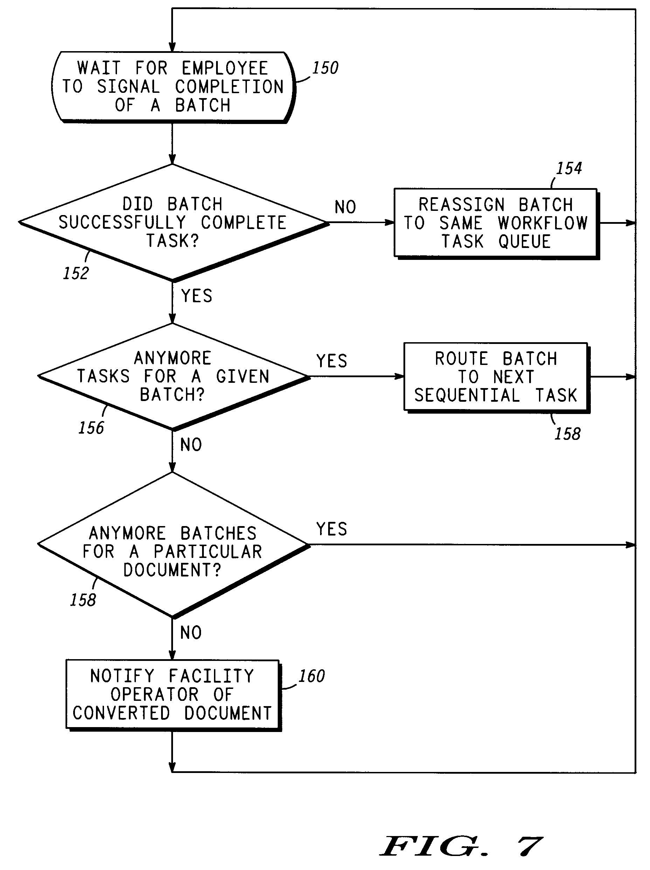

According to FIG. 2, once the workflow tasks are defined and created by the analyst for a particular document in step 30, PMACC 10 begins managing and tracking the workflow tasks assigned to each of the batches of the document traversing through PMACS 5. This step first involves assigning certain workflow tasks and batches to qualified employees as shown generally in the flowchart of FIG. 6. Moreover, step 30 also involves tracking and updating the execution of a batch through a sequence of workflow tasks as shown generally in the flowchart of FIG. 7.

The flowchart of in FIG. 6 shows how PMACC 10 assigns and manages employees of the document conversion facility. Employee management is an important aspect in making the overall operation of PMACS 5 more efficient, which helps in reducing the conversion cost per page of a document. PMACC 10 provides a way to manage and keep track of the training, skills, productivity, and quality ratings of individual employees. PMACC 10 also supports the storage of personnel information, statistical data, and performance data of each employee of the document conversion facility.

As shown in FIG. 6, PMACC 10 waits in step 100 for an employee to report to work or waits until an employee needs more batches on which to perform an assigned task. After an employee punches-in, PMACC 10 prioritizes in step 102 which of the batches has higher priority for each of the workflow task queues. A workflow task queue is a queue which stores information about which of the batches need to have this particular workflow task performed. A workflow task queue may be a first-in-first-out (FIFO) stack except that the priority of the batches can be altered to accommodate how soon the task is executed for a particular batch. If the priority of each of the batches defaults to the default priority, then the first batch on a particular workflow task queue is assigned to a qualified employee first, followed by assigning the next batch on the workflow task queue to the next available qualified task operator. Otherwise, if a batch is assigned a higher priority by the facility operator or PMACC 10, PMACC 10 will put the batch having the highest priority on the top of the workflow task queue. The batch that has the highest priority will be assigned to the first available qualified task operator.

Each of the batches can be individually assigned a priority, or the whole document can be assigned a priority which will also be assigned to each of the batches for the particular document. For example, each of the batch objects "B1", "B2" and "B3" shown in FIG. 5 include a priority assigned to it by the facility operator or by PMACC 10. A facility operator has the option of choosing a priority for each of the documents/batches by examining the priority of the batches for a particular workflow task queue on the facility control monitor 12 shown in FIG. 1 and altering the priority by inputting the new priority via keyboard 14. Some of the reasons for assigning a batch a higher priority are that the batch may require special handling, the batch is harder to read because a special font is being used, or there are some other special requirements which may lengthen the time required to perform a certain task on the batch, for example. If a batch or document is not given a special priority, PMACC 10 will assign the default priority to the document/batch.

Once PMACC 10 prioritizes each of the batches on each of the workflow task queues in step 102, PMACC 10 determines in step 104 which batch and task combination has the highest priority. This determination helps PMACC 10 to know which workflow task-batch needs to be performed first by the first qualified employee. In addition to each of the batches having a designated priority, each of workflow task objects stores information about the priority when a particular task should be performed. For example, the document conversion facility may receive a large amount of documents. Without being able to assign more people to handle the tasks associated with converting batches of these documents, PMACS 5 would be unable to handle the large influx and conversion of the documents in an efficient manner.

PMACC 10 determines in step 104 which workflow task has the highest priority by summing the workflow task priority stored in the workflow task object with the priority of the batch which is stored in the batch object. The sum of the priority of the workflow task-batch combination dictates which workflow task and batch has to be executed first. The higher the priority, the higher the workflow task-batch combination number.

Once the priority is determined for each workflow task-batch combination in step 104, PMACC 10 determines whether an employee has been assigned a specific workflow task or particular batches by the facility operator in step 106. Supervisors have the option of moving a specific batch from one employee to another or placing a batch in a pool which is available to any of the qualified operators. For example, before the next employee shift, the facility operator may view on the facility control monitor 12 what employees are going to be reporting to work. The facility operator can also obtain a listing of which workflow task-batch combinations have the highest priority. If a task or a particular document requires a special skill that only a few of the highly trained employees can perform, then the facility may assign those qualified employees to perform the specialized task. Therefore, the employee, when reporting to work, will be assigned to perform a specific task on certain batches as shown as step 112 of FIG. 6.

If the facility operator has not assigned a task or batches to an employee, PMACC 10 will determine in step 108 which primary task and secondary tasks the employee is able to perform and at what level of skill the employee can perform each of the tasks. The level of skill can range from expert (one who is highly qualified and proficient in performing a particular task) to trainee (one who needs basic training on how to perform a particular task). Employee information such as task skills, skill level for each task, and employee personal information (name, address, phone, etc.), for example, are stored in PMACC 10.

After PMACC 10 determines which employees are reporting to work and their respective task skills and proficiency at performing those tasks, PMACC 10 matches an employee possessing the required task skills and proficiency level with the workflow task-batch combination for which the employee is most qualified to perform in step 110. For example, suppose workflow task "WFT1" shown in FIG. 5 has a priority of 5, batch "B1" has a priority of 1, batch "B2" has a priority of 2, workflow task "WFT3" has a priority of 3, and batch "B3" has priority of 1. The workflow task-batch combinations each have the following priority: WFT1-B1 is 6, WFT1-B2 is 7, and WFT3-B3 is 4. Therefore, when an employee who reports to work is highly qualified to perform WFT1, the employee will be assigned workflow
task WFT1 and batch B2. However, if the employee is not trained to perform workflow task WFT1 but is qualified to perform WFT3, the employee will be assigned to perform workflow task WFT3 on batch B3 instead of workflow task WFT1 on batch B2. PMACC 10 cannot assign a workflow task to an employee who is not trained and certified to perform the particular workflow task.

As shown in FIG. 6, once the employee who possesses certain skills is matched with a workflow task-batch combination which the employee can perform, PMACC 10 assigns and retrieves in step 112 the designated batches from PMACC 10 for the qualified employee. The employee then begins to perform the assigned workflow task on the designated batches. The normal rule is that the assigned operator will perform all processing for an assigned batch through an assigned task until it is completed. PMACC 10 returns to step 100 and waits for the next employee to punch-in or until an employee requires more batches before repeating the steps shown in FIG. 6.

While FIG. 6 shows a flowchart of how PMACC 10 manages and assigns employees to certain tasks and batches, FIG. 7 shows how PMACC 10 controls execution of particular tasks for each of the batches. PMACC 10 can execute the employee management steps of FIG. 6 while simultaneously executing the job control management steps of FIG. 7. PMACC 10 is able to handle the management of a large number of transactions simultaneously and determine the many different workflow tasks required by different documents based on differing contractual requirements.

It is through job control that PMACC 10 controls the sequence of execution of each of the batches through their assigned workflow tasks. Job control is central to managing PMACS 5 and the entire document conversion facility. All physical documents and their electronic counterparts are under the control and management of PMACC 10. PMACC 10 and the supervisors of the document conversion facility share the responsibility of ensuring that batches flow smoothly through PMACS 5 and that the delivery requirements are met for each contract currently under production.

As shown in FIG. 7, PMACC 10 waits in step 150 until an employee signals that a batch has completed a certain task. PMACC 10 determines in step 152 whether the batch successfully completed the task. PMACC 10 can make this determination by examining the page object associated with each of the batches to check if the proper workflow task flag is set. If any of the pages do not have the proper workflow task flag set, then some of the pages still need to be processed through the workflow task. Some of the reasons a batch did not successfully complete its assigned task is that an employee missed some of the pages in the batch while performing the assigned task or an employee performing the next sequential task noticed errors in the pages of the batch. For example, a zone operator may identify a poor image and request that the corresponding page be rescanned. PMACC 10 or the operator can note the pages in error and signal the completion of the task for the batch containing errors in step 150. In addition, each employee can annotate each batch and page with processing comments. These comments will provide other operators later in the conversion workflow tasks with pertinent information, e.g., the source image for a particular page had a poor quality. This information will help operators performing other tasks know that the best scan was performed so they will not redirect the batch back to the scanning task.

Since PMACC 10 tracks each employee who acts upon an assigned batch, the batch can be reassigned by PMACC 10 in step 154 to the employee who caused the error to occur. PMACC 10 will reroute the batch to the earliest sequential corrective task identified for that batch. Moreover, the operator who previously performed the task on the batch will reprocess only the individual pages which were identified for reprocessing. All other data remains unmodified. This valuable tracking feature allows employees to correct their own mistakes, helps them to see what errors occurred and may help to reduce future instances of rework caused by the same types of errors from the same employee. Once the batch has been reassigned in step 154, PMACC 10 returns to step 150 to wait for an employee to signal that an assigned task on an assigned batch has been completed.

A batch cannot be identified as completing one of the tasks until all pages within a batch have successfully completed the task as well as those tasks prior to it. If the batch successfully completed its assigned task in step 152, then PMACC 10 determines in step 156 whether there are any more tasks for a given batch. PMACC 10 makes this determination by examining the workflow task object of the workflow task just completed on the particular batch and checking whether there is a reference to a next workflow task object. If there is a reference to a next workflow task, PMACC 10 routes the batch to the next sequential workflow task in step 158 and then returns to the wait state in step 150.

If there are no more tasks to be executed for a particular batch in step 156, PMACC 10 checks in step 158 whether any more batches need processing for a particular document. PMACC 10 examines each of the batch objects to see if they all successfully completed all of the assigned tasks. If all of the batches have successfully completed their assigned tasks, then PMACC 10 notifies the facility operator at the facility control monitor 12 in step 160 that a document has been converted. Otherwise, if there exist more batches which need processing on certain tasks, PMACC 10 returns to the wait state in step 150. Moreover, PMACC 10 returns to the wait state in step 150 after notifying the facility operator of a converted document in step 160.

To assist management of the conversion process, PMACC 10 maintains statistics and histories of employee productivity and document conversion efficiency. To measure employee productivity, statistics are kept on the amount of time an employee spends on each batch and task. Items such as pages processed per hour by employee by task can be reported. Comparison reports between operators can also be displayed in the facility control monitor 12.

In addition to employee performance monitoring, quality can be measured by identifying reprocess rates per batch per responsible employee and task. During the pre-production phase, the range of acceptable task quality can be identified and used during the production phase to indicate the need to re-examine the workflow tasks.

Each time an employee accesses PMACC 10, the employee must provide his or her account name and password. This allows PMACC 10 to record the location and identity of each employee as he or she logs on to a particular workstation. Therefore, PMACC 10 has knowledge of the employee who is operating it and can use that data to record how productive an employee is. Time spent on a given task by a specific employee is tracked by PMACC 10.

The standard unit of productivity to measure employee performance is pages per hour. The standard unit however can be weighted by various factors inherent in individual contracts, such as page and task complexity, for example. PMACC 10 records the physical pages per hour of each process/employee task. When these statistics are used for employee productivity comparison, they are normalized using such factors as page and task complexity to allow meaningful statistical relationships to be drawn between employees operating on different tasks and documents.

PMACS 5 is configured by default to provide a broad range of reporting options concerning individual employees and groups of employees. This allows effective management programs to be set in place based upon individual employee productivity. Employees who regularly perform at lower productivity rates then their counterparts can be easily identified and trained to improve their performance. Monitoring of subsequent progress can be done, and remedial training or termination of the employee can be accomplished through solid, reliable data. PMACC 10 removes much of the data gathering responsibility from the supervisors and managers.

PMACC 10 allows supervisors to enter additional information about employee performance, such as interviews and formal reviews, for example. PMACC 10 also provides a mechanism for storing a subjective rating of the employee's performance which is entered by his or her immediate supervisor. This subjective weighting is based solely on the opinion and observation of the direct supervisor. The facility manager may draw various performance reports, which use this subjective rating to assign an overall performance rating to each employee. The amount of weight carried by the subjective rating can be varied by the facility management as desired.

PMACC 10 is responsible for providing a set of standard reports that the production conversion bureau manager can generate. A history of these reports is maintained. The amount of time that the reports are retained is user-configurable. At a minimum, PMACC 10 is capable of generating reports that allow a comparison of actual production performance against proposed production numbers. The report contains information about the number of batches that have been reworked and the amount of time that it took for each of the batches to be reworked.

It will be appreciated by those skilled in the art that the present invention effectively prioritizes the workflow tasks used to convert a document, prioritizes which document should be converted first, assigns employees to a workflow task for which they are most qualified to perform, and simultaneously tracks a number of documents through the conversion process.

Accordingly, it is intended by the appended claims to cover all modifications of the invention which fall within the true spirit and scope of the invention. For example, the highest priority of which workflow task-batch combination should be performed first could be the lowest number instead of the highest number as discussed above.

## Claims

1. A document conversion system (5) for converting a plurality of documents, said documents comprising a plurality of batches, each of said batches comprising a plurality of pages, said batches being converted through a plurality of workflow tasks, a plurality of employees performing said workflow tasks, said document conversion system comprising:
a plurality of workstations (16) where said employees perform said workflow tasks on said batches; and
workflow task and employee management means (10) coupled to each of said workstations for managing and tracking said batches through said workflow tasks and for managing, tracking, and assigning employees to said workflow tasks for each of said batches.

2. A document conversion method executed by a computer (10) as part of a computer program for converting a plurality of documents, said documents comprising a plurality of batches, each of said batches comprising a plurality of pages, said batches being converted through a plurality of workflow tasks, a plurality of employees performing said workflow tasks, said document conversion method comprising the steps of:
(a) managing and tracking said batches through said workflow tasks; and
(b) managing, tracking, and assigning each of said employees to one of said workflow tasks for one of said batches.

3. A document conversion method as recited in claim 2, wherein step (a) comprises the step of:
(a1) determining which combination of one of said batches and one of said workflow tasks has highest priority.

4. A document conversion method as recited in claim 3, wherein step (b) comprises the steps of:
(b1) assigning one of said employee to perform said workflow task batch combination having highest priority; and
(b2) retrieving said batch having highest priority so that said one of said employees can perform said highest prioritized workflow task on said batch having highest priority.

5. A document conversion method as recited in claim 3, wherein employee personnel information including workflow task skills and skill level for each of said employees being entered in said computer, and wherein step (b) comprises the steps of:
(b1) determining which one of said employees is most qualified to perform said workflow task batch combination having highest priority based on said personnel information;
(b2) assigning said most qualified employee to perform said workflow task on said batch having highest priority; and
(b3) retrieving said batch having highest priority so that said most qualified employee can perform said highest prioritized workflow task on said batch having highest priority.

6. A document conversion method as recited in claim 3, wherein employee personnel information including workflow task skills and skill level for each of said employees being entered in said computer, and wherein step (b) comprises the steps of:
(b1) assigning one of said employees to perform said workflow task on said batch if said one of said employees has required workflow task skill and skill level to perform said workflow task; and
(b2) retrieving said batch so that said qualified employee can perform said workflow task on said batch.

7. A document conversion method as recited in claim 2, wherein step (b) comprises the steps of:
(b1) determining workflow task skill and skill level for each of said employees;
(b2) matching said workflow task skill and said skill level for each of said employees with one of said workflow tasks and one of said batches; and
(b3) retrieving said one of said batches so that one of said qualified employees who has matching workflow task skill and skill level can perform said workflow task on said one of said batches.

8. A document conversion method as recited in claim 2, wherein step (a) comprises the steps of:
(a1) determining which one of said workflow tasks needs to be performed by one of said employees on one of said batches;
(a2) waiting until said one of said workflow tasks is performed by said one of said employees on said one of said batches;
(a3) rerouting said one of said batches to one of said workflow tasks if corrective action needs to be performed on said one of said batches; and
(a4) repeating steps (a1)-(a3) until each of said workflow tasks are successfully performed on said one of said batches.

9. A document conversion method as recited in claim 8, further comprising the step of:
(a5) repeating steps (a1)-(a4) until each of said workflow tasks are successfully performed on each of said batches for a particular document.

10. A document conversion method executed by a computer (10) as part of a computer program for converting a plurality of documents, said documents comprising a plurality of batches, each of said batches comprising a plurality of pages, said batches being converted through a plurality of workflow tasks, a plurality of employees performing said workflow tasks, said document conversion method comprising the steps of:
(a) determining workflow task skill and skill level for each of said employees;
(b) determining which workflow task needs to be performed by an employee on a batch;
(c) matching said workflow task skill and said skill level for said employee with said workflow task and said batch;
(d) assigning said matching workflow task to said employee;
(e) assigning said batch to said employee to perform said assigned workflow task on said assigned batch;
(f) retrieving said batch so that said qualified employee who has matching workflow task skill and skill level can perform said assigned workflow task on said assigned batch;
(g) waiting until said assigned workflow task is performed by said employee on said assigned batch;
(h) rerouting said batch to one of said workflow tasks if corrective action needs to be performed on said batch;
(i) repeating steps (b)-(h) until each of said workflow tasks are successfully performed on said batch;
(j) repeating steps (b)-(i) until each of said workflow tasks are successfully performed on each of said batches for a particular document; and
(k) outputting said particular document once each of said workflow tasks have been performed on each of said batches.
